# EUROPEAN PATENT APPLICATION

(11) **EP 1 729 460 A1**
(43) Date of publication of application: **06.12.2006**
(21) Application number: 05727050.6
(22) Date of filing: 22.03.2005
(51) Int. Cl.: H04L 12/56, H04Q 7/36, H04Q 7/38

(54) **DYNAMIC NETWORK MANAGEMENT SYSTEM, DYNAMIC NETWORK MANAGEMENT DEVICE, AND DYNAMIC NETWORK MANAGEMENT METHOD**

(30) Priority: 25.03.2004 JP 2004090276
(71) Applicant: MATSUSHITA ELECTRIC INDUSTRIAL CO., LTD., Osaka 571-8501 (JP)
(72) Inventor: HIRANO, Jun Matsushita Electric Industrial Co, Chuo-ku, Osaka-shi, Osaka 540-6319 (JP); NG, Chan Wah Panasonic Singapore Laboratories Ltd, Tai Seng Indust.Estate Singapore 534415 (SG); TAN, Pek Yew Panasonic Singapore Laboratories Ltd, Tai Seng Indust.Estate Singapore 534415 (SG); KOH, Tien-Ming Benjamin Panasonic Singapore Lab, Tai Seng Indust.Estate Singapore 534415 (SG)
(74) Representative: Grünecker, Kinkeldey, Stockmair & Schwanhäusser Anwaltssozietät
(86) International application number: PCT/JP2005/005106
(87) International publication number: WO 2005/094015

(57) **Abstract**

A technology is disclosed for providing the global connectivity to the mobile node which is connected to the mobile access router forming the mobile network. According to the technology, it is possible for the mobile node 1000-1 to acquire the global address of the access router (the mobile access router 1200-1) the mobile node is connected through the local fixed router 1100-1. For example, the mobile node sends a Binding Update message which a special marking is embedded, or the mobile node sends a special packet. When the mobile access router receives the message or packet sent from the mobile node, it learns from the received message or packet that the mobile node does not know the primary global address of the mobile access router, and then it informs the mobile node about its primary global address.

## Description

### TECHNICAL FIELD

The present invention relates to the technology of the communication network to provide the global connectivity.

### BACKGROUND ART

The Internet today has evolved to a stage where numerous peripheral data communication networks are deployed around a system of fixed network nodes. These data communication networks are suitably known as edge networks; whereas the system of fixed network nodes surrounded by the edge networks is known as the core network. With the emergence and proliferation of wireless technology, more and more of these edge networks are employing wireless solution, thus forming a special edge network called a mobile network, or network in motion (see the following Non-patent document 1).

In essence, a mobile network is a network of nodes where the entire network changes its point of attachment to the Internet. This usually entails a mobile router (which bridges the mobile network to the Internet) in the mobile network that changes its point of attachment to the Internet between different access routers (which may, in fact, be mobile themselves). Examples of mobile networks include networks attached to people (known as Personal Area Network, or PAN) and networks of sensors deployed in vehicles such as cars, trains, ships or aircrafts. For mass transport systems such as airplanes, trains, or buses, the operators may provide passengers with permanent on-board Internet access allowing them to use their laptops, Personal Digital Assistants (PDA), or mobile phones to connect to remote hosts. Individual nodes in such a mobile network are usually connected to a central device (i.e. the mobile router), and do not change their attachment when the network is in motion. Instead, it is the mobile router that changes its point of attachment as the network moves in entirety.

In essence, the problem of network in motion is to provide continuous Internet connectivity to nodes in a network that moves as a whole. Nodes within the network that moves may not be aware of the network changing its point of attachment to the Internet. This differs from the traditional problem of mobility support as addressed by Mobile IPv4 (see the following Non-patent document 2) in Internet Protocol version 4 (IPv4) (see the following Non-patent document 3) and Mobile IPv6 (see the following Non-patent document 4) in Internet Protocol version 6 (IPv6) (see the following Non-patent document 5). In the Non-patent documents 2 and 4, the main objective is to provide mobility support to individual hosts rather than an entire network.

In Mobile IP, each mobile node has a permanent home domain. When the mobile node is attached to its home network, it is assigned a primary global address known as a home-address. When the mobile node is away, i.e. attached to some other foreign networks, it is usually assigned a temporary global address known as a care-of-address. The idea of mobility support is such that the mobile node can be reached at the home-address even when it is attached to other foreign networks. This is done in the Non-patent documents 2 and 4 with an introduction of an entity at the home network known as a home agent. Mobile nodes register their care-of-addresses with the home agents using messages known as Binding Updates. The home agent is responsible to intercept messages that are addressed to the mobile node's home-address, and forward the packet to the mobile node's care-of-address using IP-in-IP Tunneling (see the following Non-patent document 6 and 7). IP-in-IP tunneling involves encapsulating an original IP packet in another IP packet. The original packet is sometimes referred to as the inner packet, and the new packet that encapsulates the inner packet is referred to as the outer packet.

Extending the concept of mobility support for individual hosts to mobility support for a network of nodes, the objective of a network in motion solution is to provide a mechanism where nodes in a mobile network can be reached by their primary global addresses, no matter where on the Internet the mobile network is attached to. There exist a few prior attempts to solve the network in motion problem, all of them are based on Mobile IP (see the Non-patent documents 2 and 4).

One proposed solution for network in motion is in the following Patent document 1. Here the mobile router controlling a mobile network performs routing of packets to and from the mobile network using some routing protocols when it is in its home domain. When the mobile router and its mobile network move to a foreign domain, the mobile router registers its care-of-address with its home agent. An IP-in-IP tunnel is then set up between the mobile router and the home agent. The routing protocol used when the mobile router is at its home domain is again performed over the IP-in-IP tunnel. This means that every packet going to the mobile network will be intercepted by the home agent and forwarded to the mobile router through the IP-in-IP tunnel. The mobile router then forwards the packet to a host in its mobile network. When a node in its mobile network wishes to send a packet out of the network, the mobile router intercepts the packet and forwards the packet to the home agent through the IP-in-IP tunnel. The home agent then sends the packet out to the intended recipient.

Another solution disclosed in the following Patent document 2 is largely similar, except it specifically stated support for IPv6 (see the Non-patent document 5) only.

Given the diversity of wireless technology (i.e. Bluetooth, IEEE802.11a/b/g, Ultra Wideband, Infrared, Generalized Packet Radio Service), it is not unimaginable to picture a scenario where there is a nested mobile network, that is, a mobile network within another mobile network. This creates a problem known as ping-pong routing, or nested-tunnel with the solution proposed in the Paten document 1. Nested tunnel is the case where tunnel established by one mobile router with its home agent is encapsulated within another tunnel established by another mobile router with its home agent. The nesting of tunnels will cause an increase packet traverse time, since a packet needs to visit more than one home agent before reaching its final destination. In addition, multiple encapsulations also increase the packet size, which may result in unnecessary fragmentations.

To solve this problem, another solution proposed in the following Non-patent document 8, involves the use of a Reverse Routing Header to avoid having too many levels of encapsulation when a mobile network get nested (i.e. a mobile network attaching itself to another mobile network). Here, the lowest level mobile network sets up a Reverse Routing Header in its tunnel packet to its home agent. As high-level mobile routers intercept this packet on its way, the higher-level mobile router does not encapsulate this packet into another IP-in-IP tunnel. Instead, the high-level mobile router copies the source address in the packet to the Reverse Routing Header, and puts its own care-of-address as the source address. In this way, when the home agent of the first mobile router receives the packet, it can determine the chain of mobile routers that is in the path between the first mobile router and itself. Subsequently when the home agent wishes to forward another intercepted packet for the first mobile router, it can include an extended Type 2 Routing Header so that the packet is directly sent to the first mobile router via other high-level mobile routers.

Security is one major problem of the reverse routing header solution in the Non-patent document 8. The following Non-patent document 9 proposes a relatively secure solution to the nested tunnel optimization problem. This solution, known as the Access Router Option (ARO) Solution, defines a new option in mobility headers specified in Mobile IPv6. This new option, called the Access Router Option, is used by the sender (i.e. mobile router or mobile host) to inform the recipient (e.g. home agent or correspondent node) the primary global address of the access router the sender is attached to. After sending the binding update message with the access router option, the mobile node can then insert a special signal called the "direct-forwarding-request" signal to the data packet it sends out. This signal will cause an upstream mobile access router to send binding updates of its own to the destination address. This process is repeated until the topmost mobile access router is reached. With all upstream mobile access routers sending binding updates to the destination, the destination can build a chain of mobile access routers the mobile node is attached to. This can be used to construct the extended Type 2 Routing Header, so that when the destination node wants to send a packet back to the mobile node, it can embed the packet with the routing header, and the packet will be routed directly to the mobile node via the chain of mobile access routers.
[Non-patent document 1] Devarapalli, V., et. al., "NEMO Basic Support Protocol", IETF Internet Draft: draft-ietf-nemo-basic-02.txt, Dec 2003.
[Non-patent document 2] Perkins, C. E. et. al., "IP Mobility Support", IETF RCF 2002, Oct 1996.
[Non-patent document 3] DARPA, "Internet Protocol", IETF RFC 791, Sep 1981.
[Non-patent document 4] Johnson, D. B., Perkins, C. E., and Arkko, J., "Mobility Support in IPv6", Internet Draft: draft-ietf-mobileip-ipv6-18.txt, Work In Progress, June 2002 .
[Non-patent document 5] Deering, S., and Hinden, R., "Internet Protocol Version 6 (IPv6) Specification", IETF RFC 2460, Dec 1998.
[Non-patent document 6] Simpson, W., "IP in IP Tunneling", IETF RFC 1853, Oct 1995.
[Non-patent document 7] Conta, A., and Deering, S., "Generic Packet Tunneling in IPv6", IETF RFC 2473, Dec 1998.
[Non-patent document 8] Thubert, P., and Molteni, M., "IPv6 Reverse Routing Header and Its Application to Mobile Networks", Internet Draft: draft-thubert-nemo-reverse-routing-header-04.txt, Work In Progress, Feb 2004.
[Non-patent document 9] Ng, C. W., and Tanaka, T., "Securing Nested Tunnel Optimization with Access Router Option", Internet Draft: draft-ng-nemo-access-router-option-00.txt, Work In Progress, Oct 2002.
[Non-patent document 10] Narten, T., Nordmark, E., and Simpson, W., "Neighbour Discovery for IPv6", IETF RFC 2461, Dec 1998.
[Non-patent document 11] Patridge, C., and Jackson, A., "IPv6 Router Alert Option", IETF RFC 2711, Oct 1999.
[Patent document 1] Leung, K. K., "Mobile IP mobile router", US Patent 6,636,498, Oct 2003.
[Patent document 2] Markki, O. E., et. al., "Mobile Router Support for IPv6", US Patent Application US20030117965A1, Mar 2002.

The way the sender learns of the primary global address of its access router is through router advertisement messages broadcasted by the access router. Router advertisements are specified in the Non-patent document 10. In the Non-patent document 9, the access router supporting the solution must actively broadcast its primary global address of its egress interface in the router advertisement it sends out to its ingress interfaces. The information within the router advertisement containing the primary global address is henceforth referred to as "Access-Router-Address-Information" or "ARA-Info" in short. This way, mobile nodes attached to ingress interface of an access router will learn the primary global address of the access router and also discover that the access router supports the ARO solution.

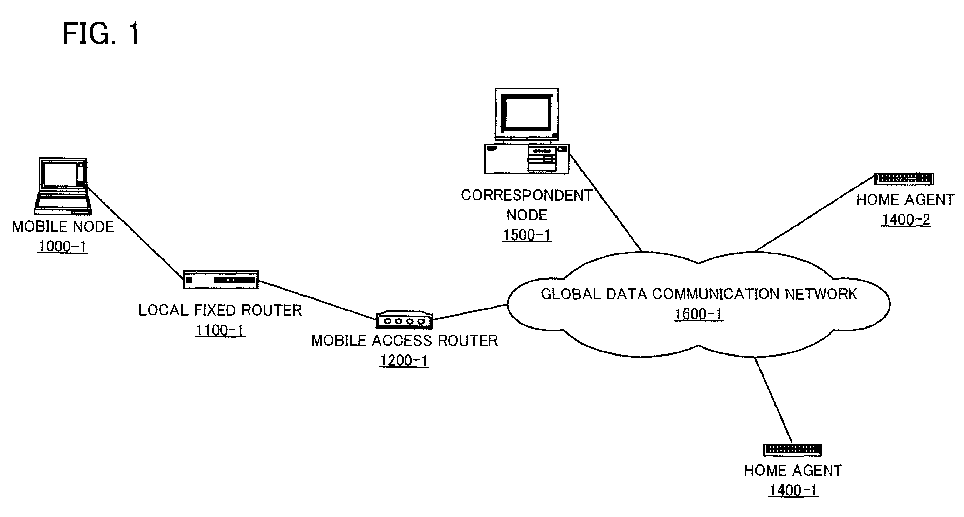

This arrangement has a problem when there is an intervening local router that lies in between an inner mobile node and the outer mobile router. This is illustrated in Fig. 1. In Fig. 1, the mobile node 1000-1 is attached to a local fixed router 1100-1. The local fixed router 1100-1 is permanently connected to a mobile access router 1200-1. This kind of deployment scenario is commonly seen in big transport vessels, such as train or ship, where a mobile access router is used to provide the train/ship access to the global Internet. A local fixed router, connected to the mobile access router, is deployed in each car/cabin of the train/ship, to provide wireless connections for each car/cabin. A laptop acting as a mobile host (or a PDA in a wireless PAN, acting as the mobile router for the wireless PAN) can attach to one of these local fixed routers.

Such a deployment scenario forms the situation of a local fixed router residing in between the mobile node and the mobile access router. Since the local fixed router 1100-1 is permanently connected to the mobile access router 1200-1, it does not need to have or understand mobility protocols. It simply routes packets to and from the mobile node 1000-1 and the mobile access router 1200-1. Therefore, the local fixed router will not use mobility related protocol, implying that the router advertisement sent by the local fixed router 1000-1 will not contain its own primary global address.

This configuration of network deployment will cause the ARO solution to fail, since the router advertisement broadcasted by local fixed router 1100-1 will not contain any ARA-Info. In addition, even though the router advertisement sent by mobile access router 1200-1 will contain its own primary global address in an ARA-Info, the mobile node 1000-1 will not receive such advertisement. This is because router advertisements can only be sent within a hop, and all routers operating in the IPv6 protocol cannot forward a router advertisement.

A trivial solution is to have all local fixed router deployed in a mobile network to support the ARO solution. However, doing this has its disadvantages. Firstly, this means that compatibility with a legacy router is lost. Secondly, by supporting the full suite of ARO solution (which is a mobility protocol) on a router that does not change its point of attachment, the system complexity is unnecessarily increased. This translates to higher cost of development and higher cost of maintenance.

### DISCLOSURE OF THE INVENTION

This invention enhances the ARO solution by specifying four different approaches in each of the contained embodiment. The first method is for the mobile node 1000-1 to embed special markings in the binding update messages it sends out. The mobile access router 1200-1 will scan for such signals and know that the sender is trying to discover a mobile access router. The mobile access router 1200-1 then tells the sender its primary global address.

The second method is for the mobile access router 1200-1 to scan through all incoming packets to look for a binding update message sent by the mobile node 1000-1. Because the mobile node 1000-1 is using the ARO solution, a special bit in the binding update message is set. The mobile access router 1200-1 will know that the sender supports the ARO solution, but does not know the primary global address of its access router. The mobile access router 1200-1 then tells the sender its primary global address.

The third method is for the mobile node 1000-1 to send a special packet to all routers in its upstream. Upon receiving this packet, routers that support the ARO solution will response with their primary global address.

The last method is to deploy the local fixed router 1100-1 such that it will embed an ARA-Info with the primary global address of the mobile access router it is connected to into the router advertisement messages the local fixed router 1100-1 itself sends.

This invention enables the global connectivity to be provided to the mobile node and the mobile network even though the local fixed router resides in between the mobile access router forming the mobile network and the mobile node connected to this mobile network.

### BRIEF DESCRIPTION OF THE DRAWINGS

Fig. 1 is a diagram showing the example of system architecture commonly applied to the first to fourth embodiments of the present invention;
Fig. 2 is a flowchart depicting the algorithm used when the mobile node sends a Binding Update message in the first embodiment of the present invention;
Fig. 3 is a flowchart showing the method for processing incoming packets received from the ingress interface by the mobile access router in the first embodiment of the present invention;
Fig. 4 is a flowchart depicting the algorithm used when the mobile node sends a Binding Update message in the second embodiment of the present invention;
Fig. 5 is a flowchart showing the method for processing incoming packets received from the ingress interface by the mobile access router in the second embodiment of the present invention;
Fig. 6 is a flowchart depicting the algorithm used when the mobile node sends a Binding Update message in the third embodiment of the present invention;
Fig. 7 is a flowchart showing the method for processing incoming packets received from the ingress interface by the mobile access router in the third embodiment of the present invention;
Fig. 8 is a flowchart showing the method for processing incoming packets received from the egress interface by the mobile node in the fourth embodiment of the present invention; and
Fig. 9 is a flowchart depicting the algorithm used when the local fixed node sends a router advertisement message from its ingress interface in the fourth embodiment of the present invention.

### BEST MODE OF CARRYING OUT THE INVENTION

A system, and its associated apparatus and method, for provisioning global connectivity to roaming networks containing legacy routers are disclosed in this description. To help understand the disclosed invention, the following definitions are used:

(i) A "packet" is a self-contained unit of data of any possible format that could be delivered on a data network. A "packet" normally consists of two portions: a "header" and a "payload" portion. The "payload" portion contains data that are to be delivered, and the "header" portion contains information to aid the delivery of the packet. A "header" must have a source address and a destination address to respectively identify the sender and recipient of the "packet".

(ii) A "packet tunneling" refers to a self-contained packet being encapsulated into another packet. The act of "packet tunneling" is also referred to as "encapsulation" of packets. The packet that is being encapsulated is referred to as the "tunneled packet" or "inner packet". The packet that encapsulates the "inner packet" is referred to as the "tunneling packet" or "outer packet". Here, the entire "inner packet" forms the payload portion of the "outer packet".

(iii) A "mobile node" is a network element that changes its point of attachment to the global data communication network. It may be used to refer to an end-user terminal, or an intermediate network element that serves as a gateway, a router, or an intelligent network hub that can change its point of attachment to the global data communication network. The "mobile node" that is an end-user terminal is more specifically referred to as a "mobile host"; whereas the "mobile node" that is an intermediate network element that serves as a gateway, a router, or an intelligent network hub is more specifically referred to as a "mobile router".

(iv) A "default router" of a network element refers to a router residing on the same link of the network element where all packets originated from the network element with a destination that the network element has no other known route to reach are forwarded to.

(v) An "access router" of a mobile node refers to a router which the mobile node associates with to attach to the data communication network. It is usually the default router of the mobile node. An access router of a mobile node may itself be mobile, and such an access router is known as a "mobile access router".

(vi) A "home-address" is a primary global address assigned to a mobile node that can be used to reach the mobile node regardless of where on the global data communication network the mobile node is currently attached to. In this description, the abbreviation "HoA" is used to abbreviate "home-address".

(vii) A mobile node that is attached to the global data communication network where its home-address is topologically compatible with the addresses used in the vicinity of the point of attachment is referred to as "at home". The vicinity of this point of attachment that is controlled by a single administrative authority is referred to as the "home domain" of the mobile node.

(viii) A mobile node that is attached to the global data communication network at a point where the home-address of the said mobile node is topologically incompatible with the addresses used in the vicinity of that point of attachment is referred to as "away", and the vicinity of the said point of attachment is referred to as the "foreign domain".

(ix) A "care-of-address" is a temporary global address assigned to a mobile node that is away such that the assigned "care-of-address" is topologically compatible with the addresses used in the vicinity of the mobile node's point of attachment to the global data communication network. In this description, the abbreviation "CoA" is used to abbreviate "care-of-address".

(x) A "home agent" is a network entity that resides at the home domain of a mobile node that performs registration services of care-of-addresses of the mobile node when it is away, and to forward packets addressed to the home-address of the mobile node to the care-of-address of the mobile node. Note that a home agent is also a router.

(xi) A "Binding Update" is a message sent from a mobile node to its home agent that informs the recipient the current care-of-address of the sender. This forms a "binding" between the care-of-address and the home-address of the mobile node at the recipient. In this description, the abbreviation "BU" is used to abbreviate "Binding Update".

In the following description, for purpose of explanation, specific numbers, times, structures, and other parameters are set forth in order to provide a thorough understanding of the present invention. However, it will be apparent to anyone skilled in the art that the present invention may be practiced without these specific details.

### <First Embodiment>

The first embodiment of this invention describes the case with respect to using a special marking embedded in a packet header when a mobile node sends out the binding update messages. The upstream mobile access router, on detecting such a special marking, will inform the mobile node about its HoA.

Fig. 1 illustrates the systems of mobile nodes and the global communication network where the current invention can be deployed. Mobile node 1000-1 is attached to a local fixed router 1100-1. The local fixed router 1100-1 is itself attached to the mobile access router 1200-1. Note that for simplicity, only one local fixed router 1100-1 is shown that is attached to mobile access router 1200-1, and only one mobile node 1000-1 is shown that is attached to the local fixed router 1100-1. In actual deployment, there can be arbitrary number of local fixed routers 1100-1 attached to mobile access router 1200-1, and arbitrary number of mobile nodes 1000-1 attached to any one of these local fixed routers 1100-1. It should be apparent to anyone skilled in the art that the current invention will apply in such cases as well.

Furthermore, nothing is specified as to whether mobile node 1000-1 is a mobile host or a mobile router. It can in fact also be a mobile access router 1200-1 itself. The intentional use of the term mobile node is so that there is no loss in generality, and the term mobile node represents both a mobile host and a mobile router. It should again be apparent to anyone skilled in the art that the current invention will apply for both cases when the mobile node 1000-1 is a mobile host, and when the mobile node 1000-1 is a mobile (access) router.

In addition, although one local fixed router 1100-1 is shown in the path between the mobile node 1000-1 and the mobile access router 1200-1, there can in fact be multiple such local fixed routers 1100-1 connected in series between the mobile node 1000-1 and the mobile access router 1200-1. It should be apparent to anyone skilled in the art to see that the current invention can be equally applied with one or more local fixed routers 1100-1 in between the mobile node 1000-1 and the mobile access route 1200-1.

The mobile access router 1200-1 is attached to the global data communication network 1600-1. This network 1600-1 can be any packet-switched network, or, in fact, be the Internet itself. Attached to the global data communication network 1600-1 are the home agents 1400-1 and 1400-2, acting as the home agents of the mobile node 1000-1 and the mobile access router 1200-1, respectively. The local fixed router 1100-1, being permanently attached to the mobile access router 1200-1, does not have mobility protocol and thus does not need a home agent. The correspondent node 1500-1 is any node on the global data communication network 1600-1 that has an ongoing traffic session with the mobile node 1000-1 (or in the case where the mobile node 1000-1 is a mobile access router, any mobile node that is behind the mobile node 1000-1).

When the mobile node 1000-1 first starts up, it receives a router advertisement message from the local fixed router 1100-1. The mobile node 1000-1 then configures a CoA for itself based on the prefix information carried in the router advertisement. Next, the mobile node 1000-1 needs to inform its home agent 1400-1 and the corresponding node 1500-1 about its new CoA to be bound to its HoA by sending them BU messages. Since the router advertisement sent by the local fixed router 1100-1 does not contain any ARA-Info, the mobile node 1000-1 cannot include any Access Router Option in the BU messages it sent out. Instead, the mobile node 1000-1 embeds a special marking in the packet header of the BU messages to indicate that subsequent upstream mobile access routers should respond with their HoA. For ease of explanation, such a marking is henceforth referred to as the "Access-Router-Address-Request" signal, or in abbreviation, the "ARA-Req". The ARA-Req can take the form of a particular bit, or a stream of bits. For example, in IPv6, there is a hop-by-hop option known as a router alert option (see the Non-patent document 11). This special marking may take the form of a specific value in the router alert option.

The local fixed router 1100-1 receives the packet, and after verifying the packet is valid, it forwards the packet upstream to the mobile access router 1200-1. The mobile access router 1200-1 will check incoming packets from its ingress interface(s) for any embedded signals such as the ARA-Req. When an ARA-Req is detected, the mobile access router 1200-1 will need to take special action in addition to the normal processing of the incoming packet. At first, the mobile access router 1200-1 will have to construct a new packet to inform the mobile node 1000-1 (as specified in the source address field of the incoming packet with the ARA-Req signal) about its HoA. This packet is henceforth referred to as the "Access-Router-Address-Response" signal or "ARA-Res" in abbreviation. Secondly, the mobile access router 1200-1 will have to remove or re-mark the incoming packet with the ARA-Req signal so that subsequent upstream routers will not respond to the ARA-Req. In this way, it is possible that only the first mobile access router 1200-1 which detects the ARA-Req signal in the packet will send the ARA-Res to the mobile node 1000-1. It is also possible that, when the mobile access router 1200-1 upstream forwards the incoming packet with the ARA-Req signal, if another mobile access router 1200-1 resides at the further upstream, this upstream mobile access router 1200-1 will also send the ARA-Res to the mobile node 1000-1.

The ARA-Res packet which the mobile access router 1200-1 sends to mobile node 1000-1 will need to carry the following information: (1) indications that this packet is a response to the ARA-Req, and (2) a value specifying the HoA of the mobile access router 1200-1. Optionally, the ARA-Res packet can also carry part of the original packet (the packet with the ARA-Req) so that mobile node 1000-1 can verify that this is a valid response.

For the removal of the ARA-Req, the exact method depends on how the ARA-Req is implemented. If the ARA-Req is a bit in the packet header, the mobile access router 1200-1 can simply clear that bit to remove the ARA-Req. If the ARA-Req is implemented as a value in the router alert option, the mobile access router 1200-1 can simply drop the router alert option to remove the ARA-Req, or change the value into some other value such that subsequent routers will simply ignore the router alert option.

Upon receiving the ARA-Res packet containing the HoA of the mobile access router 1200-1, the mobile node 1000-1 can then proceed to send new BU messages to its home agent 1400-1 and/or the correspondent node 1500-1 with an Access Router Option containing the HoA of the mobile access router 1200-1. At this time, the mobile node 1000-1 should not insert the ARA-Req, and it should follow the behavior as stipulated by the ARO solution.

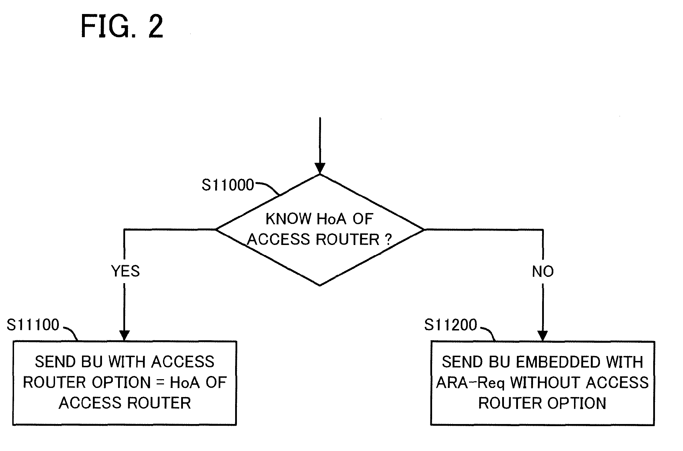

In summary, the mobile node 1000-1, when sending out a BU message, will follow the algorithm depicted in Fig. 2. In step S11000, the mobile node 1000-1 checks if it knows the HoA of its access router. If it does, (either through the ARA-Info extracted from the router advertisement message, or through a previously received ARA-Res message), then the mobile node 1000-1 will insert an Access Router Option into the BU, with value equal to the HoA of the access router, as shown in step S11100. If it does not, the mobile node 1000-1 will then insert an ARA-Req signal into the packet header of BU message, as indicated by step S11200.

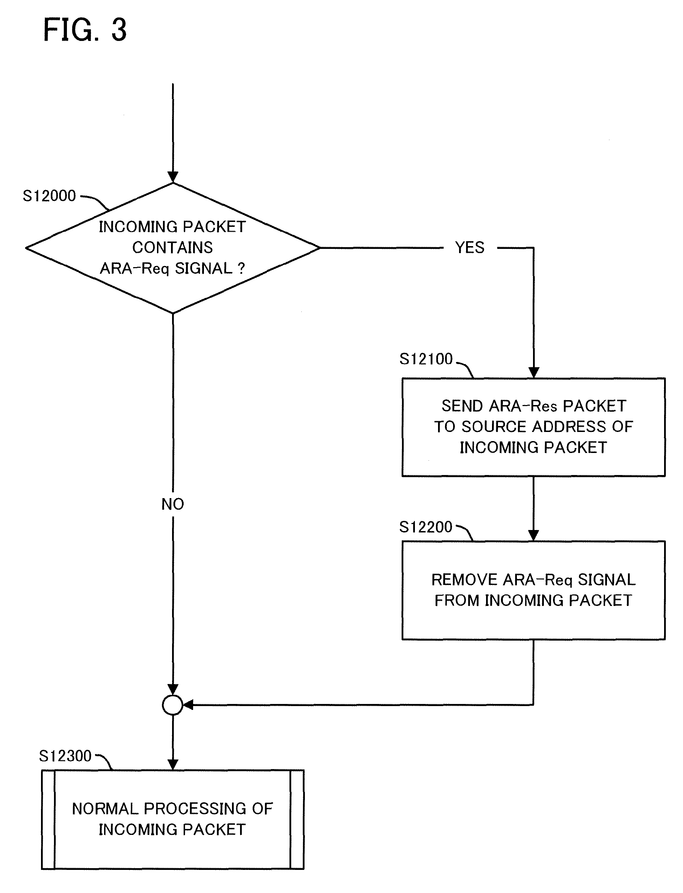

For the mobile access router 1200-1, the current invention requires a slight modification to the way it processes incoming packets from one of its ingress interface. This modification is illustrated in Fig. 3. At first, in step S12000, the mobile access router 1200-1 checks if an ARA-Req signal is present in the packet. If none is found, the mobile access router 1200-1 goes to step S12300 where it follows the normal incoming packet processing. If the packet contains an ARA-Req, it will then go to step S12100 and step 12200 before going to step S12300. In step 12100, the mobile access router 1200-1 sends an ARA-Res packet containing its HoA to the source address specified in the incoming packet. In step S12200, it removes the ARA-Req message from the incoming packet, and in step S12300, it performs the normal incoming packet processing.

Note that when storing the HoA of the mobile access router 1200-1, the mobile node 1000-1 should store this together with information of its current default router (i.e. the local fixed router 1100-1). This is done so that when the mobile node 1000-1 moves to a new location, a change of its default router will cause it to clear away the stored HoA of the mobile access router 1200-1 as well.

Thus, with the first embodiment of the current invention, a mobile node has the means of learning the HoA of an upstream mobile access router, even if there are other routers in between the mobile node and the mobile access router. This allows the mobile node to embed an Access Router Option into binding updates messages, thereby allowing the ARO solution to function as normal.

### <Second Embodiment>

The second embodiment of this invention describes the case with respect to having the mobile access router 1200-1 to scan through all incoming packets through its ingress interface(s) to look for a binding update message sent by the mobile node 1000-1. Because the mobile node 1000-1 is using the ARO solution, a special bit in the binding update message is set. The mobile access router 1200-1 will know that the sender supports the ARO solution, but does not know the HoA of its access router. The mobile access router 1200-1 then tells its HoA to the sender.

For this second embodiment, the deployment scenario in Fig. 1 is again used. When the mobile node 1000-1 first starts up, it receives a router advertisement message from the local fixed router 1100-1. The mobile node 1000-1 then configures a CoA for itself based on the prefix information carried in the router advertisement. Next, the mobile node 1000-1 needs to inform its home agent 1400-1 and/or the corresponding node 1500-1 about its new CoA to be bound to its HoA by sending them BU messages. Since the router advertisement sent by local fixed router 1100-1 does not contain any ARA-Info, the mobile node 1000-1 cannot include any Access Router Option in the BU messages it sent out.

The mobile node 1000-1 could optionally use a prespecified value (such as the all-zeroes or all-ones address) in the Access Router Option to indicate that although it is using the ARO solution, it does not (yet) know the HoA of its access router. This may not be sometimes necessary, since the ARO solution may require the mobile node 1000-1 to set a special bit in the BU message to indicate that it is using the ARO solution. With this, an absence of the Access Router Option is enough to indicate that the mobile node 1000-1 does not know the HoA of its access router.

The local fixed router 1100-1 receives the packet, and after verifying the packet is valid, then forwards the packet upstream to the mobile access router 1200-1. The mobile access router 1200-1 will check incoming packets in its ingress interface(s) whether any of the packets is a BU message. When a BU message is detected, the mobile access router 1200-1 will need to further check if the BU indicates that the sender is using the ARO solution in addition to the normal processing of the incoming packet.

The ARA-Res packet the mobile access router 1200-1 sends to the mobile node 1000-1 will need to carry the following information: (1) indications that this packet is a message notifying the HoA of the mobile access router 1200-1 and (2) a value specifying the HoA of the mobile access router 1200-1. Optionally, the ARA-Res packet can also carry part of the original packet (packet with BU message) so that the mobile node 1000-1 can verify that this is a valid response.

Upon receiving the ARA-Res packet containing the HoA of the mobile access router 1200-1, the mobile node 1000-1 can then proceeds to send new BU messages to its home agent 1400-1 and/or the correspondent node 1500-1 with an Access Router Option containing the HoA of the mobile access router 1200-1. At this time, the mobile node 1000-1 should follow the behavior as stipulated by the ARO solution.

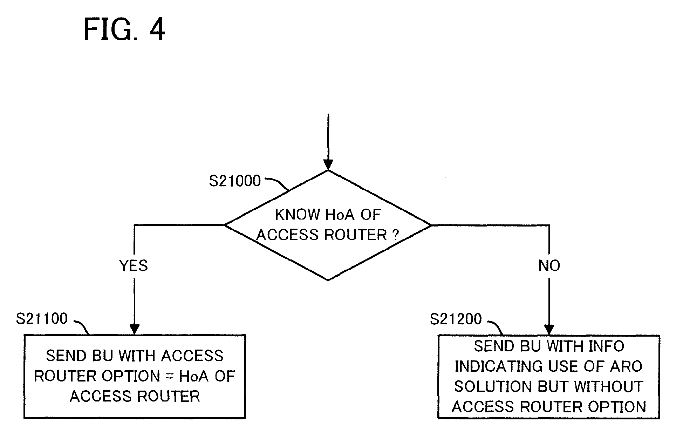

In summary, the mobile node 1000-1, when sending out a BU message, will follow the algorithm depicted in Fig. 4. In step S21000, mobile node 1000-1 checks if it knows the HoA of its access router. If it does (either through the ARA-Info extracted from router advertisement message, or through a previously received ARA-Res message), then the mobile node 1000-1 will insert an Access Router Option into the BU, with value equal to the HoA of the access router, as shown in step S21100. If it does not, the mobile node 1000-1 will send the BU message such that any node inspecting the BU message will realize that the mobile node 1000-1 is using the ARO solution, but does not known its access router's HoA, as indicated by step S21200. In other words, the mobile node 1000-1 sends BU with information indicating the use of the ARO solution but without an access router option in step S21200.

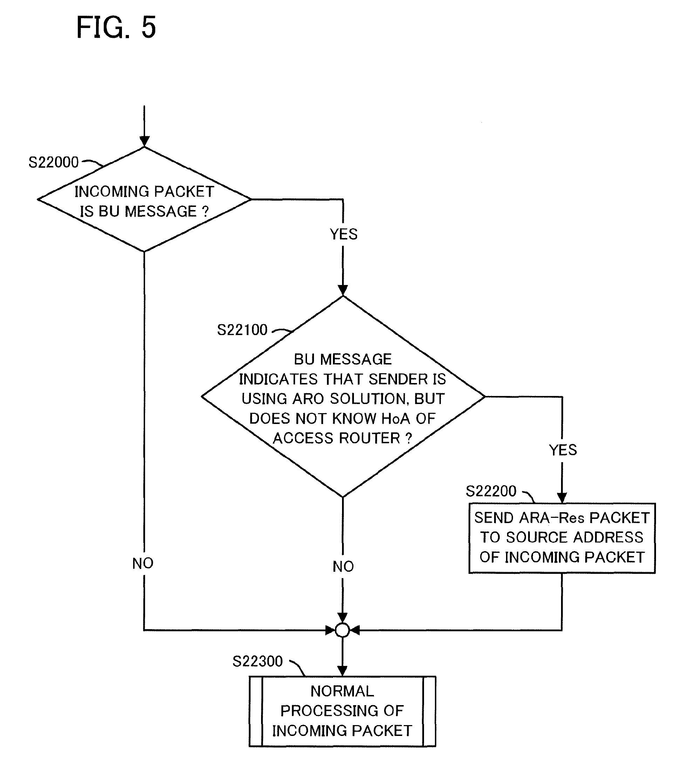

For the mobile access router 1200-1, the current invention requires a slight modification to the way it process incoming packets from one of its ingress interface. This modification is illustrated in Fig. 5. At first, in step S22000, the mobile access router 1200-1 checks if the incoming packet is a BU message. If it is not, the normal packet processing is carried out, as in step S22300. If the incoming packet is a BU message, in step S22100, the mobile access router 1200-1 further checks if the BU message indicates that the sender is trying to use the ARO solution, but does not know its access router's HoA. This can be deduced from the absence of an Access Router Option together with a bit indicating the use of the ARO solution, or from the Access Router Option containing a specially marked address (such as the all-zeroes address, or the all-ones address).

If it could not be deduced that the sender of a BU message is trying to use the ARO solution but does not know its access router's HoA, the mobile access router 1200-1 goes to step S22300 where it follows the normal incoming packet processing as specified in original ARO solution. If it could be deduced that the sender of a BU message is trying to use the ARO solution but does not know its access router's HoA, the mobile access router 1200-1 will then go to step S22200 where it sends an ARA-Res packet containing its HoA to the source address specified in the incoming packet, before carrying out the normal incoming packet processing as shown in step S22300.

As in the first embodiment, when storing the HoA of the mobile access router 1200-1, the mobile node 1000-1 should store this together with information of its current default router (i.e. the local fixed router 1100-1). This is done so that when the mobile access router 1200-1 moves to a new location, a change of its default router will cause it to clear away the stored HoA of the mobile access router 1200-1 as well.

Thus, with the second embodiment of the current invention, a mobile node has the means of learning the HoA of an upstream mobile access router, even if there are other routers in between the mobile node and the mobile access router. This allows the mobile node to embed an Access Router Option into binding update messages, thereby allowing the ARO solution to function as normal.

### <Third Embodiment>

The third embodiment of this invention describes the case with respect to having the mobile node sends a special packet to all routers in its upstream. Upon receiving this packet, routers that support the ARO solution will respond with their home-addresses.

For this third embodiment, the deployment scenario in Fig. 1 is again used. When the mobile node 1000-1 first starts up, it receives a router advertisement message from the local fixed router 1100-1. The mobile node 1000-1 then configures a CoA for itself based on the prefix information carried in the router advertisement. Next, the mobile node 1000-1 needs to inform its home agent 1400-1 and the corresponding node 1500-1 about its new CoA to be bound to its HoA by sending them BU messages. Since the router advertisement sent by the local fixed router 1100-1 does not contain any ARA-Info, the mobile node 1000-1 cannot include any Access Router Option in the BU messages it sent out.

When this happens, the mobile node 1000-1 delays the sending of the BU messages and instead sends out a special packet to all upstream routers requesting to know their HoAs. This special packet may take the form of an Internet Control Message Protocol (ICMP) with a specific type indicating it is an access router's address request. Alternatively, it may be a normal router solicitation message (see the Non-patent document 10) with a special option indicating that the recipient should include their home-addresses in the router advertisement responses. For ease of explanation, we refer to this packet as an Access Router Address Probe message, or in short, the ARA-Probe.

Because the mobile node 1000-1 does not know the presence of an upstream mobile access router 1200-1, it will have to use a broadcast or multicast address in the destination field of the ARA-Probe. IPv6 defines an all-router multicast address that refers to all routers. The mobile node 1000-1 can use this as the destination address. Alternatively, a special multicast address may be defined so that it only refers to upstream routers. This multicast address is henceforth referred to as the upstream-router multicast address. This means that all routers will silently ignore any packet addressed to the upstream-router multicast address that are received from their egress interfaces, and will forward a packet addressed to the upstream-router multicast address received from an ingress interface to the egress interface.

To limit the amount of flooding with multicast addresses, IPv6 has a hop limit field that limits the number of times a packet can be forwarded. The mobile node 1000-1 may use a small hop limit value (e.g. 2 or 3) to reduce flooding.

The local fixed router 1100-1 will receive the ARA-Probe. It will most likely not understand this packet, but will continue to forward this packet upstream (i.e. to the mobile access router 1200-1). Once the mobile access router 1200-1 receives this packet, it will send the ARA-Res to the sender of this ARA-Probe (i.e. the mobile node 1000-1) as described in the first embodiment of the current invention.

The ARA-Res packet that the mobile access router 1200-1 sends to the mobile node 1000-1 will need to carry the following information: (1) indications that this packet is a response to the ARA-Probe, and (2) a value specifying the HoA of the mobile access router 1200-1. Optionally, the ARA-Res packet can also carry a part of the original ARA-Probe message so that the mobile node 1000-1 can verify that this is a valid response. Since the mobile access router 1200-1 has responded with the ARA-Res, if the mobile access router 1200-1 should not continue to forward the ARA-Probe upstream, it can proceed to drop the packet with the ARA-Probe or to delete or invalidate the ARA-Probe message and then perform the same processing as that for the normal packet.

After the mobile node 1000-1 has received the ARA-Res, it can send out its BU messages with the Access Router Option filled in. The remaining operation of the mobile node 1000-1 and the mobile access router 1200-1 will follow that stipulated in the original ARO solution. Note that it may be possible for the mobile node 1000-1 to receive more than one ARA-Res using the broadcast method. In this case, the mobile node 1000-1 should use the ARA-Res it has received first since the responder whose response has come back fastest is considered to be nearest.

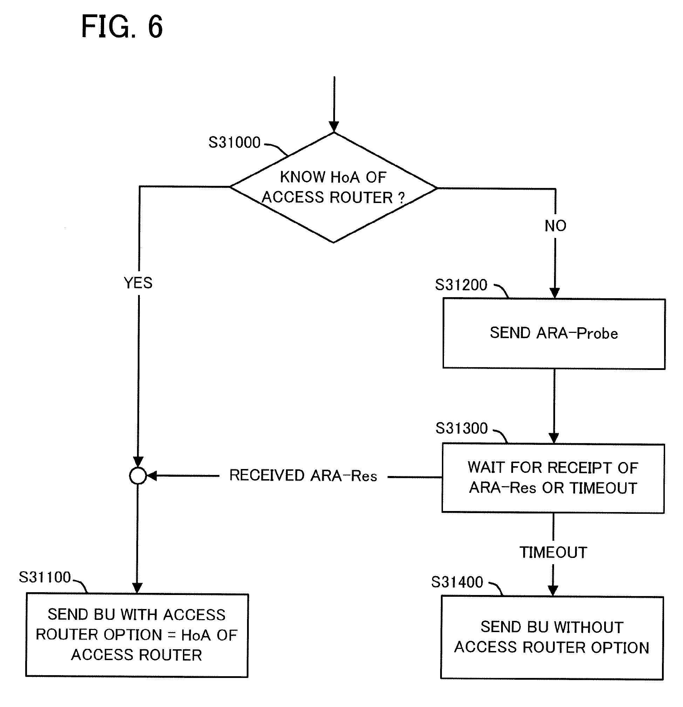

In summary, the mobile node 1000-1, when sending out a BU message, will follow the algorithm depicted in Fig. 6. In step S31000, the mobile node 1000-1 checks if it knows the HoA of its access router. If the mobile node 1000-1 knows it (either through the ARA-Info extracted from a router advertisement message, or through a previously received ARA-Res message), then the mobile node 1000-1 will insert an Access Router Option into the BU, with value equal to the HoA of the access router, as shown in step S31100. If the mobile node 1000-1 does not know it, the mobile node 1000-1 will then go to step S31200, where it sends out the ARA-Probe. The mobile node 1000-1 then enters a wait state as shown in step S31300, where it wait for the receipt of a valid ARA-Res, or wait for a timeout. When a valid ARA-Res is received, the mobile node 1000-1 will go to step S31100 where it sends the BU with the access router option inserted, where the value of HoA of the access router is set to the value equal to the HoA extracted from the ARA-Res. When it is a timeout, the mobile node 1000-1 assumes that there is no mobile access router 1200-1 in its upstream, and proceeds to send a BU without any access router option, as shown in step S31400.

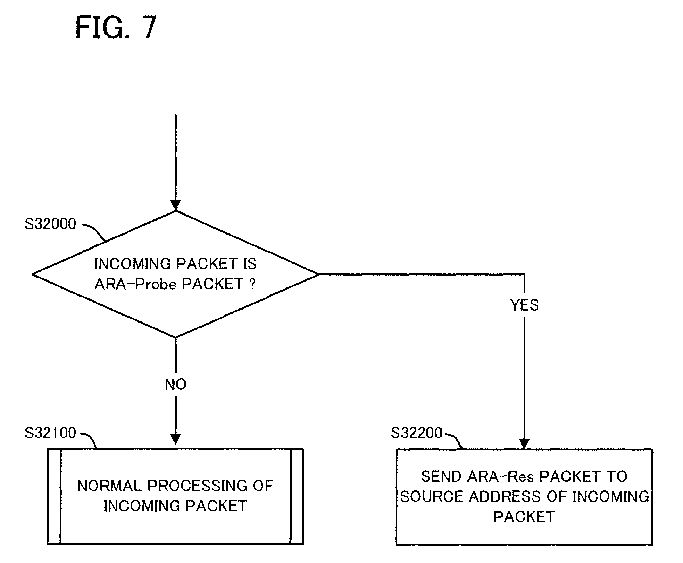

For the mobile access router 1200-1, the current invention requires a slight modification to the way it process incoming packets from one of its ingress interface. This modification is illustrated in Fig. 7. At first, in step S32000, the mobile access router 1200-1 checks if the incoming packet is an ARA-Probe. If the packet is not an ARA-Probe, the mobile access router 1200-1 goes to step S32100 where it follows the normal incoming packet processing. If the packet is an ARA-Probe, the mobile access router 1200-1 will then go to step S32200 where it sends an ARA-Res packet containing its HoA to the source address specified in the incoming packet.

As in the above-mentioned first embodiment, when storing the HoA of the mobile access router 1200-1, the mobile node 1000-1 should store this together with information of its current default router (i.e. the local fixed router 1100-1). This is done so that when the mobile node 1000-1 moves to a new location, a change of its default router will cause it to clear away the stored HoA of the mobile access router 1200-1 as well.

As the above-mentioned, with the third embodiment of the current invention, a mobile node has the means of learning the HoA of an upstream mobile access router, even if there are other routers in between the mobile node and the mobile access router. This allows the mobile node to embed an Access Router Option into binding updates messages, thereby allowing the ARO solution to function as normal.

### <Fourth Embodiment>

The forth embodiment of this invention describes the case with respect to having the local fixed router configured such that it will embed the primary global address of the mobile access router it is connected to into the router advertisement messages the local fixed router itself sends.

For the fourth embodiment, the deployment scenario in Fig. 1 is again used. Here, the local fixed router 1100-1 is configured to listen in its egress interface for the router advertisements sent by its default router (i.e. the mobile access router 1200-1).

Once detecting that the router advertisement contains the ARA-Info, the local fixed router 1100-1 will store the address extracted from the ARA-Info. Subsequently, when the local fixed router 1100-1 sends out its own router advertisement to its ingress interface(s), it will insert an ARA-Info containing this HoA of its default router into the router advertisement. Hence to the mobile node 1000-1, it will appear as though the local fixed router 1100-1 is a mobile access router supporting the ARO solution; whereas in actual fact, the local fixed router 1100-1 need not understand the main parts of the ARO solution. Instead, it just needs to know how to extract the HoA of the mobile access router 1200-1 from the router advertisements it has received from the mobile access router 1200-1, and insert the HoA of the mobile access router 1200-1 into the router advertisements the local fixed router 1100-1 sends in itself.

When storing the HoA of the mobile access router 1200-1, the local fixed router 1100-1 should store this together with information of its current default router (i.e. the mobile access router 1200-1). This is done so that when the mobile node 1000-1 moves to a new location, a change of its default router will cause it to clear away the stored HoA of the mobile access router 1200-1 as well.

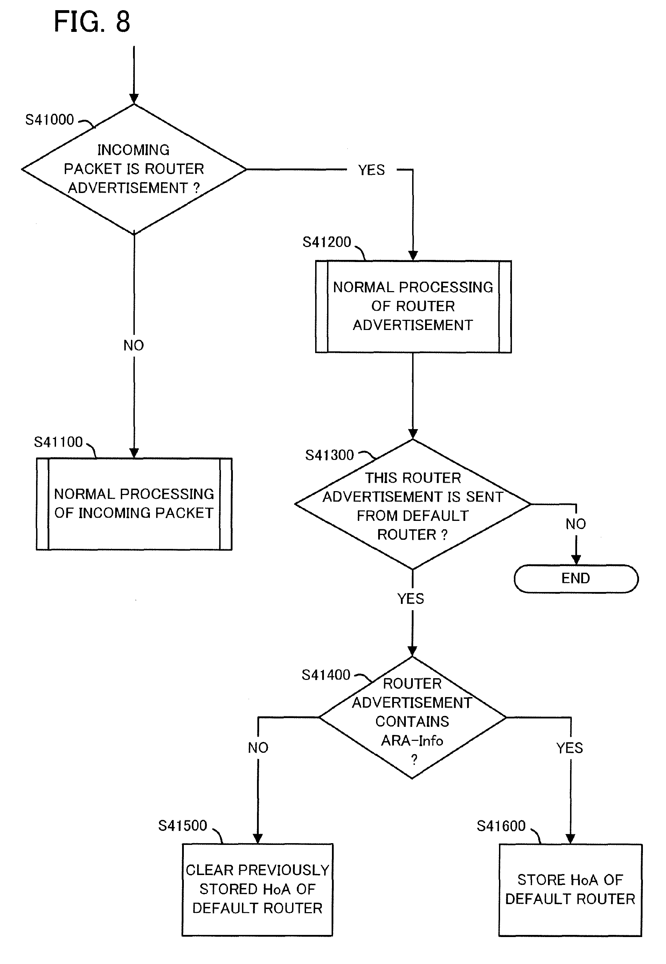

Thus in this forth embodiment of the current invention, the only modification to the original ARO solution is the local fixed router 1100-1. Both the mobile node 1000-1 and the mobile access router 1200-1 follow the procedure as stipulated in the original ARO solution. Fig. 8 shows the modification to the normal processing of incoming packets from the egress interface of the local fixed router 1100-1. In step S41000, the local fixed router 1100-1 first checks if the incoming packet from the egress interface is a router advertisement. If the incoming packet is not a router advertisement, step S41100 is taken where the normal processing (the processing possible for all general IP routers) of packets would be carried out. If the incoming packet is a router advertisement, the normal processing of the router advertisement will be carried out, as shown in step S41200. This procedure may cause the local fixed router 1100-1 to change its configured default router.

After this processing (the processing of step S41200), the router advertisement is checked to see if it is from the default router of the local fixed router 1100-1 as shown in step S41300. If it is not from the default router, then no further processing is required. If it is from the default router, the router advertisement is next checked to see if it contains an ARA-Info in step S41400. If the router advertisement contains no ARA-Info, an internal variable storing the HoA of the default router is cleared, as shown in step S41500. If the router advertisement contains the ARA-Info (the HoA of the default router), this address is stored in the afore-mentioned internal variable in step S41600.

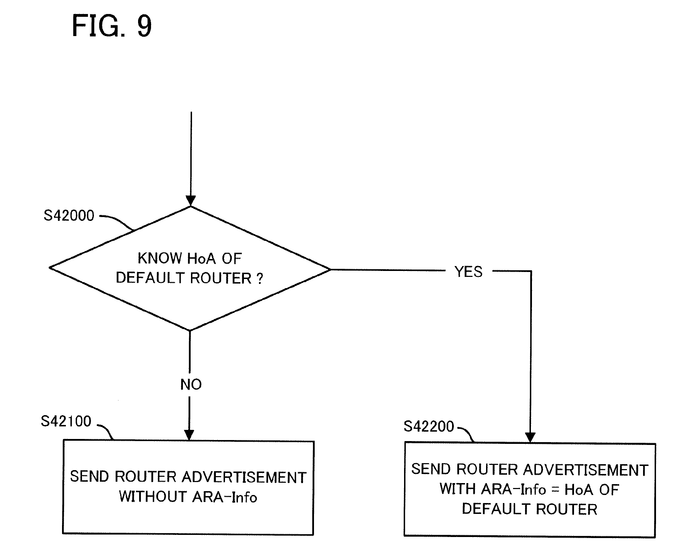

The modification to the behavior of the local fixed router 1100-1 described below is when sending out router advertisement to its ingress interface. Fig. 9 shows this modification. In step S42000, the local fixed router 1100-1 first check if it has (knows) a previously stored HoA of its default router (i.e. the mobile access router 1200-1). If it does not have the HoA, step S42100 will be taken where the local fixed router 1100-1 will send out a router advertisement without an ARA-Info. On the other hand, if it does have a previously stored HoA of its default router, the local fixed router 1100-1 will insert an ARA-Info into the router advertisement containing the HoA of the default router, as shown in step S42200.

As the above, with the fourth embodiment of the current invention, a mobile node has the means of learning the HoA of an upstream mobile access router, even if there is a router that does not fully support the ARO solution in between the mobile node and the mobile access router. This allows the mobile node to embed an Access Router Option into binding updates messages, thereby allowing the ARO solution to function as normal.

### INDUSTRIAL APPLICABILITY

This invention enables the global connectivity to be provided to the mobile node and the mobile network even though the local fixed router resides in between the mobile access router forming the mobile network and the mobile node connected to this mobile network. Thus, this invention can be applied to the technique of the communication network to provide the global connectivity, especially the technique of communication using IP.

## Claims

1. A dynamic network management system in a communication system including a mobile access router forming a mobile network, a local fixed router residing in the mobile network, and a mobile node participating in the mobile network, so arranged that the mobile node sends information to request for a global address of the mobile access router, and then the mobile access router receiving the information from the mobile node through the local fixed router, informs the mobile node about the global address of the mobile access router.

2. A dynamic network management system in a communication system including a mobile access router forming a mobile network, a local fixed router residing in the mobile network, and a mobile node participating in the mobile network, so arranged that the mobile node which does not know a global address of the mobile access router, sends information indicating that the mobile node does not know the global address of the mobile access router, and then the mobile access router receiving the information from the mobile node through the local fixed router, informs the mobile node about the global address of the mobile access router.

3. A dynamic network management system in a communication system including a mobile access router forming a mobile network, a local fixed router residing in the mobile network, and a mobile node participating in the mobile network, so arranged that a global address of the mobile access router is stored in a predetermined information storing means in the local fixed router when the local fixed router receives information including the global address of the mobile access router, and the local fixed router informs the mobile node about the global address of the mobile access router stored in the predetermined information storing means.

4. A dynamic network management apparatus placed in a mobile access router capable of forming a mobile network, comprising:
a connection means for connecting a local fixed router residing in the mobile network,
an information detection means for detecting information to request for a global address of the mobile access router, the information being sent from a certain mobile node participating in the mobile network ,and the information being forwarded by the local fixed router to the mobile access router, and
a response information sending means for sending response information including the global address of the mobile access router to the mobile node which has sent the information through the local fixed router in order to inform the global address of the mobile access router when the information is detected by the information detection means.

5. A dynamic network management apparatus placed in a mobile access router capable of forming a mobile network, comprising:
a connection means for connecting a local fixed router residing in the mobile network,
an information detection means for detecting information indicating that a mobile node does not know a global address of the mobile access router, the information being sent from the mobile node participating in the mobile network and not knowing the global address of the mobile access router, and the information being forwarded by the local fixed router to the mobile access router, and
a response information sending means for sending response information including the global address of the mobile access router to the mobile node which has sent the information through the local fixed router in order to inform the global address of the mobile access router when the information is detected by the information detection means.

6. The dynamic network management apparatus according to claim 4 or 5, comprising:
an information deleting means for deleting the information from a packet with the information when the information is detected by the information detection means, and
a forwarding means for forwarding the packet which the information has been deleted by the information deleting means to a predetermined destination set in the packet.

7. The dynamic network management apparatus according to claim 4 or 5, comprising a forwarding means for forwarding a packet with the information to a determined destination set in the packet.

8. The dynamic network management apparatus according to claim 4 or 5, comprising a dropping means for dropping a packet with the information.

9. A dynamic network management apparatus placed in a mobile node capable of participating in a mobile network formed by a mobile access router, comprising:
a connection means for connecting a certain router residing in the mobile network,
a sending means for sending information to request for a global address of the mobile access router to the router when the mobile node does not know the global address of the mobile access router, the information being forwarded by the router connected via the connection means to the mobile access router, and
a response information receiving means for receiving response information including the global address of the mobile access router sent from the mobile access router as a response to the information sent by the sending means.

10. A dynamic network management apparatus placed in a mobile node capable of participating in a mobile network formed by a mobile access router, comprising:
a connection means for connecting a certain router residing in the mobile network,
an sending means for sending information indicating that the mobile node does not know a global address of the mobile access router to the router when the mobile node does not know the global address of the mobile access router, the information being forwarded by the router connected via the connection means to the mobile access router, and
a response information receiving means for receiving response information including the global address of the mobile access router sent from the mobile access router as a response to the information sent by the sending means.

11. The dynamic network management apparatus according to claim 9 or 10, comprising a information embedding means for embedding the information in a packet header of a Binding Update message sent to a predetermined communication apparatus, and being so arranged that the sending means sends the packet of the Binding Update message which the information is embedded by the information embedding means.

12. The dynamic network management apparatus according to claim 9 or 10, so arranged that the sending means sends information indicating that an access router option can be used in parallel with sending the information.

13. The dynamic network management apparatus according to claim 9 or 10, comprising a packet creating means for creating a special packet representing the information, and being so arranged that the sending means sends the special packet created by the packet creating means.

14. A dynamic network management apparatus placed in a local fixed router statically connected to a mobile access router forming a mobile network, comprising:
a receiving means for receiving information including a global address of the mobile access router, and
an information storing means for storing the global address of the mobile access router received by the receiving means.

15. The dynamic network management apparatus according to claim 14, comprising an informing means for informing a node which is connected behind the local fixed router about the global address of the mobile access router stored in the information storing means.

16. The dynamic network management apparatus according to claim 14, comprising:
a determination means for determining whether the information received by the receiving means is sent from a default router of the mobile network or not, and
a store controlling means for controlling such that the global address of the default router is stored in the information storing means only when the determination means determines that the information is sent from the default router.

17. The dynamic network management apparatus according to claim 14 wherein the information received by the receiving means is a router advertisement message of the mobile access router.

18. The dynamic network management apparatus according to claim 15 so arranged that the informing means informs the node using a router advertisement with the global address of the mobile access router.

19. A dynamic network management method used by a mobile access router capable of forming a mobile network and connecting to a local fixed router residing in the mobile network, comprising:
an information detection step of detecting information to request for a global address of the mobile access router, the information being sent from a certain mobile node participating in the mobile network ,and the information being forwarded by the local fixed router to the mobile access router, and
a response information sending step of sending response information including the global address of the mobile access router to the mobile node which has sent the information through the local fixed router in order to inform the global address of the mobile access router when the information is detected at the information detection step.

20. A dynamic network management method used by a mobile access router capable of forming a mobile network and connecting to a local fixed router residing in the mobile network, comprising:
an information detection step of detecting information indicating that a mobile node does not know a global address of the mobile access router, the information being sent from the mobile node participating in the mobile network and not knowing the global address of the mobile access router, and the information being forwarded by the local fixed router to the mobile access router, and
a response information sending step of sending response information including the global address of the mobile access router to the mobile node which has sent the information through the local fixed router in order to inform the global address of the mobile access router when the information is detected at the information detection step.

21. The dynamic network management method according to claim 19 or 20, comprising:
an information deleting step of deleting the information from a packet with the information when the information is detected at the information detection step, and
a forwarding step of forwarding the packet which the information has been deleted at the information deleting step to a predetermined destination set in the packet.

22. The dynamic network management apparatus according to claim 19 or 20, comprising a forwarding step of forwarding a packet with the information to a determined destination set in the packet.

23. The dynamic network management apparatus according to claim 19 or 20, comprising a dropping step of dropping a packet with the information.

24. A dynamic network management method used by a mobile node capable of participating in a mobile network formed by a mobile access router and connecting to a certain router residing in the mobile network, comprising:
a sending step of sending information to request for a global address of the mobile access router to the router when the mobile node does not know the global address of the mobile access router, the information being forwarded by the connected router to the mobile access router, and
a response information receiving step of receiving response information including the global address of the mobile access router sent from the mobile access router as a response to the information sent at the sending step.

25. A dynamic network management method used by a mobile node capable of participating in a mobile network formed by a mobile access router and connecting to a certain router residing in the mobile network, comprising:
a sending step of sending information indicating that the mobile node does not know a global address of the mobile access router to the router when the mobile node does not know the global address of the mobile access router, the information being forwarded by the connected router to the mobile access router, and
a response information receiving step of receiving response information including the global address of the mobile access router sent from the mobile access router as a response to the information sent at the sending step.

26. The dynamic network management method according to claim 24 or 25, comprising a information embedding step of embedding the information in a packet header of a Binding Update message sent to a predetermined communication apparatus, wherein the packet of the Binding Update message which the information is embedded at the information embedding step is sent at the sending step.

27. The dynamic network management method according to claim 24 or 25, wherein information is sent indicating that an access router option can be used in parallel with sending the information at the sending step.

28. The dynamic network management method according to claim 24 or 25, comprising a packet creating step of creating a special packet representing the information, wherein the special packet created at the packet creating step is sent at the sending step.

29. A dynamic network management method used in a local fixed router statically connected to a mobile access router forming a mobile network, comprising:
a receiving step of receiving information including a global address of the mobile access router, and
an information storing step of storing the global address of the mobile access router received at the receiving step in a predetermined information storing means.

30. The dynamic network management method according to claim 29, comprising an informing step of informing a node which is connected behind the local fixed router about the global address of the mobile access router stored in the predetermined information storing means.

31. The dynamic network management apparatus according to claim 29, comprising:
a determination step of determining whether the information received at the receiving step is sent from a default router of the mobile network or not, and
a store controlling step of controlling such that the global address of the default router is stored in the predetermined information storing means only when it is determined at the determination step that the information is sent from the default router.

32. The dynamic network management method according to claim 29 wherein the information received at the receiving step is a router advertisement message of the mobile access router.

33. The dynamic network management method according to claim 30 wherein the node is informed by a router advertisement with the global address of the mobile access router at the informing step.
